# EUROPÄISCHE PATENTSCHRIFT

(11) **EP 1 027 185 B1**
(45) Veröffentlichungstag und Bekanntmachung des Hinweises auf die Patenterteilung: **11.06.2003**
(21) Anmeldenummer: 98951809.7
(22) Anmeldetag: 16.10.1998
(51) Int. Cl.: B22F 5/10

(54) **VERFAHREN ZUR HERSTELLUNG EINER SCHLAUCHKUPPLUNG**
METHOD FOR PRODUCING A HOSE COUPLING
PROCEDE DE REALISATION D'UN RACCORD POUR TUYAU FLEXIBLE

(30) Priorität: 17.10.1997 NL 1007304
(43) Veröffentlichungstag der Anmeldung: 16.08.2000
(73) Patentinhaber: Actuant Corporation, Glendale, Wisconsin 53209-3703 (US)
(72) Erfinder: VAN MEERVELD, Marten, NL-7557 ER Hengelo (NL); MENTINK, Laurentius, Andreas, Gerardus, NL-7483 AC Haaksbergen (NL)
(74) Vertreter: Brookhuis, Hendrik Jan Arnold
(86) Internationale Anmeldenummer: NL9800595
(87) Internationale Veröffentlichungsnummer: WO99020421

(56) Entgegenhaltungen:
- DE-A- 2 849 133
- US-A- 5 566 920
- US-A- 5 666 633
- T. HUNT AND N. VAUGHAN: "The Hydraulic Handbook", 1996, ELSEVIER SCIENCE LTD, OXFORD

## Beschreibung

Die vorliegende Erfinding bezieht sich auf ein Verfahren zur Herstellung einer metallenen Schlauchkupplung, die dazu ausgelegt ist, fest auf dem Ende eines Druckschlauches für Hydrauliköl unter Druck montiert zu werden, welche Schlauchkupplung eine Fluidumverbindung zwischen dem Schlauch und einem Anschlußorgan schafft, wobei die Schlauchkupplung zumindestens einen Schlauchnippel aufweist, der in montiertem Zustand in dem Schlauch steckt und ein Verbindungsteil umfaßt, das dazu ausgelegt ist, eine Verbindung mit dem Anschlußorgan zu bilden, wobei die Schlauchkupplung weiter bei jedem Schlauchnippel eine verformbare Hülse umfaßt, die in montiertem Zustand um das auf dem Schlauchnippel geschobene Schlauchteil liegt und unter Verformung der Hülse den Schlauch auf dem Schlauchnippel hält, wobei sich ein Ölkanal durch das Verbindungsteil und den zumindestens einen Schlauchnippel erstreckt.

Die vorliegende Erfindung bezieht sich weiter auf eine Schlauchkupplung, die mit dem erfindungsgemäßen Verfahren hergestellt ist.

Metallene Schlauchkupplungen sind allgemein bekannt um hydraulische Druckschläuche, die auf die übliche Weise mit einer Verstärkungseinlage versehen sind, mit einem Anschlußorgan, wie einer Hydraulikpumpe, einem Ventil, einem Zylinder, und so weiter zu verbinden.

Die NL 1001273 und DE 28 49 133 zeigen rechtwinklige Schlauchkupplungen mit einem einzigen Schlauchnippel, der rechtwinklig auf das als Einsteckteil ausgeführte Verbindungsteil ausgerichtet ist.

Zur Herstellung derartiger Schlauchkupplungen wird bis heute von zwei Teilen ausgegangen, und zwar dem Schlauchnippel und dem Verbindungsteil. Hierbei ist das Verbindungsteil mit einer Bohrung zum Aufnehmen des Schlauchnippels versehen. Diese beiden Teile werden durch Hartlöten miteinander verbunden, um so einerseits eine solide Verbindung zwischen beiden Teilen zu schaffen und andererseits zwischen beiden Teilen eine Abdichtung, die den hohen Druck des Hydrauliköls widerstehen kann, zu schaffen.

Das Hartlöten hat den Nachteil, daß von außen her nicht sichtbar ist, ob die Verbindung zwischen dem Schlauchnippel und dem Verbindungsteil flüssigkeitsdicht ist. Aus diesem Grund muß jede Schlauchkupplung einzeln auf Flüssigkeitsdichte getestet werden, wobei sich dann noch das Problem ergibt, daß das Überstehen eines kurzen Druckbelastungstests nicht mit Sicherheit bedeutet, daß die Lötnaht über einen längeren Zeitraum dicht bleibt. Namentlich unter Einfluß von Schwingungen kann später eine Undichtigkeit entstehen.

Weiter ist es nachteilig, daß Lötmaterial in den Kanal in der Schlauchkupplung gelangen kann. Wenn dieser Kanal einen geringen Querschnitt aufweist, zum Beispiel 1 bis 2 Millimeter, kann dies dazu führen, daß der Kanal verstopft. Weiter kann Lötmaterial, das in den Kanal gelangt, sich nach einiger Zeit lösen und dann zum Beispiel die Wirkung von Ventilen in dem hydraulischen System nachteilig beeinflussen.

Das Hartlöten ist außerdem ein kostspieliges Verfahren, weil das Löten derartiger Schlauchkupplungen in einem Ofen, in dem ein Vakuum herrscht, oder ein Schutzgas vorhanden ist, stattfinden sollte.

Der vorliegenden Erfindung liegt die Aufgabe zugrunde, Maßnahmen vorzuschlagen, die eine verbesserte Schlauchkupplung schaffen und dabei zugleich eine Verminderung der Herstellungskosten ermöglichen.

Die vorliegende Erfindung schafft ein Verfahren zur Herstellung einer Schlauchkupplung nach dem Oberbegriff des Anspruchs 1, das dadurch gekennzeichnet ist, daß das Verbindungsteil und der zumindestens eine Schlauchnippel als einteiliger Körper mittels des "Metal-Injection Moulding"-Verfahrens hergestellt sind.

Die vorliegende Erfindung basiert auf dem Gedanken, daß mit dem an sich bekannten "Metal-Injection Moulding"-Verfahren ein einteiliger Körper mit den für Schlauchkupplungen notwendigen Toleranzen hergestellt werden kann. Weil dieses Verfahren das Spritzgießen eines Grünlings umfaßt, bringt dies das Risiko mit sich, daß sich Teilnähte auf dem erhaltenen Produkt bilden werden. Derartige Teilnähte sind bei Schlauchkupplungen, insbesondere auf der Oberfläche eines Schlauchnippels unerwünscht, weil dann der Schlauch mit großem Druck auf eine solche Teilnaht drücken würde und dann eingeschnitten werden würde, was zu einer Undichtigkeit führt.

Es hat sich herausgestellt, daß das erfindungsgemäße Verfahren eine Schlauchkupplung schaffen kann, ohne die Notwendigkeit einer Nachbearbeitung zum Entfernen einer etwaigen Teilnaht.

Wie bekannt werden beim Spritzgießen Teilnähte dadurch verursacht, daß die Gußformen nicht einwandfrei aneinander anschließen. Deshalb ist bei der bevorzugten Ausbildung der Erfindung vorgesehen, daß die Berührungsflächen der Spritzgußformteile entlang den Rändern, die das Nest der Spritzgußform für den Schlauchnippel bilden, lokal erhöht werden, zum Beispiel um 1/100sten Millimeter. Hierdurch wird die Schließkraft der Spritzgußform auf diese Ränder konzentriert und wird das Entstehen von Teilnähten auf dem Schlauchnippel vermieden.

In Verbindung mit der Verwendung einer derartigen Spritzgußform, oder als einzelne Maßnahme kann vorgesehen sein, den durch Spritzgießen erhaltenen Grünling vor dem Sintern mit einer weichen Bürste zu bürsten. Hierdurch werden herausragende Teilnähte leicht entfernt, ohne den Grünlich zu beschädigen.

Es hat sich deshalb als möglich erwiesen, das "Metal-Injection Moulding"-Verfahren in solcher Weise auszuführen, daß keine mechanische Nachbearbeitung zum Entfernen von Teilnähten notwendig ist.

Es wird deutlich, daß durch die Verwendung des an sich bekannten "Metal-Injection Moulding"-Verfahrens alle in der Einleitung genannten Nachteile des bekannten Herstellungsverfahrens aufgehoben werden.

Das erfindungsgemäße Verfahren ist besonders vorteilhaft für die Herstellung von "abgewinkelten" Schlauchkupplungen, wobei der zumindestens eine Schlauchnippel nicht in der Verlängerung des Verbindungsteils liegt, aber es ist selbstverständlich auch für die Herstellung von geraden Schlauchkupplungen vorteilhaft.

In einer bevorzugten Ausbildung ist bei der Erfindung vorgesehen, daß der einteilige Körper der Schlauchkupplung aus rostfreiem Stahl, vorzugsweise RVS 316, hergestellt wird, so daß keine separate Behandlung, um die erforderliche Korrosionsbeständigkeit zu erreichen, mehr notwendig ist.

Die vorliegende Erfindung bezieht sich gleichfalls auf einen mit dem "Metal-Injection Moulding"-Verfahren hergestellten Schlauchnippel.

Die vorliegende Erfindung wird nachstehend anhand der Zeichnung erläutert. Es zeigt:
- Fig. 1: schematisch im Querschnitt eine Stopfbüchse eines hydraulischen Zylinders, der mit einer erfindungsgemäßen Schlauchkupplung gekuppelt ist, und
- Fig. 2: schematisch eine Ansicht in Richtung auf Pfeil A in Fig. 1 des einteiligen Körpers der Schlauchkupplung der Fig. 1.

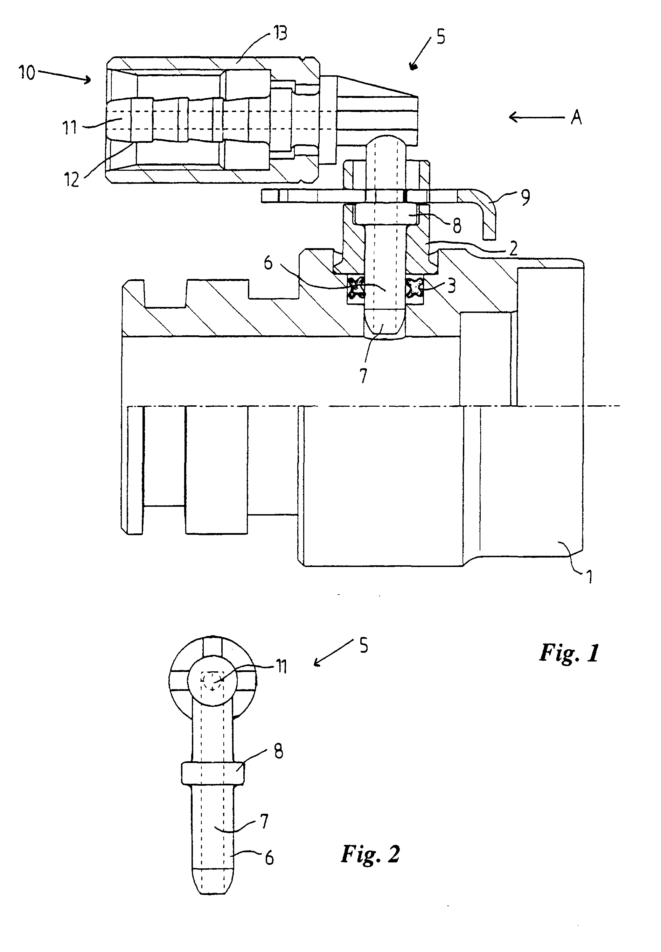

In Figur 1 ist teilweise im Querschnitt eine Stopfbüchse 1 eines linearen hydraulischen Zylinders (nicht dargestellt) gezeigt. An der Stopfbüchse 1 ist eine Verbindungsbuchse 2 angeordnet, mit einer axialen Bohrung darin, die in der Verlängerung einer radialen Bohrung in der Stopfbüchse liegt. Diese in gegenseitiger Verlängerung liegenden Bohrungen bilden eine Einsteckbohrung 3 für eine metallene Schlauchkupplung, die hier insgesamt mit der Bezugsziffer 5 angedeutet ist.

Die metallene Schlauchkupplung 5 umfaßt ein Einsteckteil 6, das dazu ausgelegt ist, die Schlauchkupplung 5 mit der Stopfbüchse 1 zu verbinden. Das Einsteckteil 6 ist im wesentlichen ein zylindrisches Rohrteil mit einem inneren Kanal 7 und einem dicken Rand 8 an der Außenseite. Eine zweibeinige Klemme 9 dient dazu, über dem dicken Rand 8 zu liegen, wenn das Einsteckteil 6 in die Einsteckbohrung 3 hineingesteckt ist. Dabei steckt jedes Bein der Klemme 9 in einem Querschlitz in der Befestigungsbuchse 2.

Die Schlauchkupplung 5 umfaßt weiter eine Schlauchnippel 10 mit einem inneren Kanal 11, welche Schlauchnippel unter einem rechten Winkel in solcher Weise an das Einsteckteil 6 anschließt, daß der innere Kanal 11 mit dem inneren Kanal 7 des Einsteckteils 6 in Verbindung steht. Wie üblich ist der Schlauchnippel 10 mit Riffeln 12 versehen, um den nicht gezeigten flexiblen Druckschlauch festzuhalten.

Zur gleichen Zeit umfaßt die Schlauchkupplung 5 eine verformbare Metallhülse 13, die um das auf den Schlauchnippel 10 geschobene Schlauchteil liegt und dazu vorgesehen ist, zusammengepreßt oder gequetscht zu werden, wodurch der Schlauch kräftig zwischen dieser Hülse 13 und dem Schlauchnippel 10 eingeklemmt wird.

Insbesondere sollte beim Herstellungsverfahren darauf geachtet werden, dass sich keine Teilnähte nahe dem freien Ende des Nippels 10 auf der Außenseite des Nippels 10 bilden, weil dort die Slauchleitung beim aufstecken auf der Nippel 10 am meisten aufgeweitet wird und die Gefahr des Einschneidens des Schlauchmaterials besteht.

Der Schlauchnippel 10 und das Einsteckteil 6 bilden einen einteiligen Körper, der mittels des "Metal-Injection Moulding"-Verfahrens hergestellt ist. Bei dem "Metal-Injection Moulding"-Verfahren wird eine spritzgießbare Masse aus einem Metallpulver bereitet, welche Masse anschließend unter Druck in eine geeignete Gießform gespritzt wird. Die Form des Nestes der Spritzgußform entspricht der Form des Schlauchkupplungskörpers. Der hierbei erhaltene Grünling wird anschließend bei einer hohen Temperatur gesintert, so daß der Körper eine hohe Stärke und Dichte bekommt.

Eventuell kann das Metallpulver mit einem Bindemittel, zum Beispiel einem Kunststoff, vermischt sein, welches Bindemittel dann vor dem Sintern aus dem Grünling, zum Beispiel durch Erwärmung des Grünlings, entfernt wird.

Vorzugsweise ist der Körper der Schlauchkupplung 5 aus einem rostfreien Stahl, namentlich RVS 316, hergestellt, weil dann keine weitere Behandlung der Schlauchkupplung 5 notwendig ist, um die gewünschte Korrosionsbeständigkeit zu realisieren.

Wie erwähnt, kann die erfindungsgemäße Schlauchkupplung auch eine andere Form aufweisen, zum Beispiel eine T-Kupplung. Weiter kann auch das Verbindungsteil der Schlauchkupplung, das in diesem Beispiel ein Einsteckteil ist, in anderer Weise, zum Beispiel als Bajonettverbindung, ausgeführt sein.

## Patentansprüche

1. Verfahren zur Herstellung einer metallenen Schlauchkupplung (5), die dazu ausgelegt ist, fest auf dem Ende eines Schlauchs für Hydrauliköl unter Druck montiert zu werden, welche Schlauchkupplung eine Fluidumverbindung zwischen dem Schlauch und einem Anschlußorgan (1) schafft, wobei die Schlauchkupplung zumindestens eine Schlauchnippel (10) aufweist, der in montiertem Zustand in dem Schlauch steckt und ein Verbindungsteil (6) aufweist, das dazu ausgelegt ist, eine Verbindung mit dem Anschlußorgan zu bilden, wobei die Schlauchkupplung weiter bei jeder Schlauchnippel eine verformbare Hülse (13) umfaßt, die in montiertem Zustand um das auf den Schlauchnippel geschobene Schlauchteil liegt und unter Verformung der Hülse den Schlauch auf der Schlauchnippel hält, wobei sich ein Ölkanal (7, 11) durch das Verbindungsteil und den zumindestens einen Schlauchnippel erstreckt, **dadurch gekennzeichnet, daß** das Verbindungsteil (6) und der Schlauchnippel (10) als einteiliger Körper mittels des "Metal-Injection Moulding"-Verfahrens hergestellt werden.

2. Verfahren nach Anspruch 1, welches Verfahren die Schritte des Schaffens einer spritzgießbaren Masse auf Basis eines Metallpulvers, des Spritzgießens der Masse in eine geeignete Spritzgußform, so daß ein Grünling erhalten wird, und des Sinterns des durch Spritzgießen erhaltenen Grünlings umfaßt.

3. Verfahren nach Anspruch 2, bei dem das Metallpulver mit einem Bindemittel zum Schaffen einer spritzgießbaren Masse gemischt wird, und bei dem das Bindemittel nach dem Spritzgießen und vor dem Sintern entfernt wird, insbesondere durch Erhitzung des Grünlings.

4. Verfahren nach Anspruch 2 oder 3, bei dem das Metallpulver ein Pulver aus rostfreiem Stahl ist.

5. Schlauchkupplung (5), die dazu ausgelegt ist, fest auf dem Ende eines Schlauchs für Hydrauliköl unter Druck montiert zu werden, welche Schlauchkupplung (5) eine Fluidumverbindung zwischen dem Schlauch und einem Anschlußorgan (1) schafft, wobei die Schlauchkupplung zumindestens eine Schlauchnippel aufweist, der in montiertem Zustand in dem Schlauch steckt und ein Verbindungsteil aufweist, das dazu ausgelegt ist, eine Verbindung mit dem Anschlußorgan zu bilden, wobei die Schlauchkupplung weiter bei jedem Schlauchnippel eine verformbare Hülse umfaßt, die in montiertem Zustand um das auf dem Schlauchnippel geschobene Schlauchteil liegt und unter Verformung der Hülse den Schlauch auf der Schlauchnippel hält, wobei sich ein Ölkanal durch das Verbindungsteil und den zumindestens einen Schlauchnippel erstreckt, **dadurch gekennzeichnet, daß** das Verbindungsteil und der Schlauchnippel als einteiliger Körper ausgebildet sind, der mittels des "Metal-Injection Moulding"-Verfahrens hergestellt ist.

6. Schlauchkupplung nach Anspruch 5, bei der zumindestens ein Schlauchnippel unter einem Winkel zu dem Verbindungsteil steht.

7. Schlauchkupplung nach Anspruch 5 oder 6, bei der das Verbindungsteil dazu ausgelegt ist, in eine zugehörige Bohrung in dem Anschlußorgan hineingesteckt zu werden.

8. Schlauchkupplung nach einem oder mehreren der vorhergehenden Ansprüche 5 - 7, bei der der einteilige Körper aus rostfreiem Stahl, vorzugsweise RVS 316, besteht.

9. Biegsame Hydraulik-Schlauchleitung mit einer in elastischen Werkstoff eingebetteten Verstärkungseinlage, die an einem Ende mit einer Schlauchkupplung nach einem oder mehreren der vorhergehenden Ansprüche 5-8 versehen ist.

## Claims

1. A method of manufacturing a metallic hose coupling (5) which is designed to be fitted fixedly to the end of a hose for pressurized hydraulic oil, which hose coupling creates a fluid connection between the hose and a connecting member (1), wherein the hose coupling has at least one hose stem (10), which, in the fitted condition, is inserted in the hose and has a connection piece (6) which is designed to form a connection with the connecting member, wherein the hose coupling furthermore comprises for each hose stem a deformable sleeve (13), which, in the fitted condition, lies around the part of the hose which is pushed onto the hose stem, and, by deformation of the sleeve, the hose is held on the hose stem, wherein a channel (7, 11) for oil extends through the connection piece and the at least one hose stem, **characterised in that** the connection piece (6) and the hose stem (10) are manufactured as a one-piece member by way of the "Metal-Injection Moulding" method.

2. A method according to Claim 1, which method comprises the steps of creating a metal powder based mass which can be injection-moulded, injection-moulding the mass into a suitable injection mould, so that a green compact is obtained, and sintering the green compact obtained by the injection-moulding operation.

3. A method according to Claim 2, wherein the metal powder is mixed with a binding agent in order to create a mass which can be injection-moulded, and wherein following injection-moulding and sintering the binding agent is removed, in particular by heating the green compact.

4. A method according to Claim 2 or Claim 3, wherein the metal powder is a stainless steel powder.

5. A hose coupling (5) which is designed to be fitted fixedly to the end of a hose for pressurized hydraulic oil, which hose coupling (5) creates a fluid connection between the hose and a connecting member (1), wherein the hose coupling has at least one hose stem, which, in the fitted condition, is inserted in the hose and has a connection piece which is designed to form a connection with the connecting member, wherein for each hose stem the hose coupling further comprises a deformable sleeve, which, in the fitted condition, lies around the part of the hose which is pushed onto the hose stem, and, by deformation of the sleeve, the hose is held on the hose stem, wherein a channel for oil extends through the connection piece and the at least one hose stem, **characterised in that** the connection piece and the hose stem are in the form of a one-piece member manufactured by way of the "Metal-Injection Moulding" process.

6. A hose coupling according to Claim 5, wherein the at least one hose stem is disposed at an angle relative to the connection piece.

7. A hose coupling according to Claim 5 or Claim 6, wherein the connection piece is designed to be inserted into an associated bore in the connecting member.

8. A hose coupling according to one or more of Claims 5 - 7, wherein the one-piece member consists of stainless steel, preferably RVS 316.

9. A flexible hydraulic pipeline having a reinforcement layer embedded in elastic material, which is provided at one end with a hose coupling according to one or more of the preceding claims 5 - 8.

## Revendications

1. Procédé de fabrication d'un raccord métallique (5) de tuyau flexible, qui est conçu pour être monté à demeure à l'extrémité d'un tuyau flexible pour huile hydraulique sous pression, lequel raccord crée une communication de fluide entre le tuyau flexible et un organe raccordé (1), le raccord présentant au moins un embout (10), qui est enfoncé à l'état monté dans le tuyau flexible, et une partie de raccordement (6) qui est conçue pour former une liaison avec l'organe raccordé, le raccord comportant en outre pour chaque embout une douille déformable (13), qui se trouve à l'état monté autour de la partie du tuyau flexible enfilée sur l'embout et maintient le tuyau flexible sur l'embout moyennant la déformation de la douille, un canal d'huile (7, 11) s'étendant à travers la partie de raccordement et le, au moins un, embout **caractérisé en ce que** la partie de raccordement (6) et l'embout (10) sont fabriqués comme corps d'une seule pièce au moyen du procédé « Metal Injection Moulding ».

2. Procédé selon la revendication 1, lequel procédé comprend les étapes de création d'une masse appropriée au moulage par injection sur la base d'une poudre métallique, de moulage par injection de la masse dans un moule à injection approprié, de telle sorte qu'un comprimé cru est obtenu, et de frittage du comprimé cru obtenu par moulage par injection.

3. Procédé selon la revendication 2, dans lequel la poudre métallique est mélangée à un liant pour créer une masse appropriée au moulage par injection, et dans lequel le liant est éliminé après le moulage par injection et avant le frittage, en particulier par réchauffage du comprimé cru.

4. Procédé selon l'une des revendications 2 ou 3, dans lequel la poudre métallique est une poudre d'acier inoxydable.

5. Raccord (5) qui est conçu en vue d'être monté à demeure à l'extrémité d'un tuyau flexible pour l'huile hydraulique sous pression, lequel raccord (5) crée une communication de fluide entre le tuyau flexible et un organe raccordé (1), le raccord présentant au moins un embout, qui est enfoncé à l'état monté dans le tuyau flexible, et une partie de raccordement qui est conçue en vue de former une liaison avec l'organe raccordé, le raccord comportant en outre, pour chaque embout, une douille déformable, qui se trouve à l'état monté autour de la partie du tuyau flexible enfilée sur l'embout et maintient le tuyau flexible sur l'embout moyennant la déformation de la douille, un canal d'huile s'étendant à travers la partie de raccordement et le, au moins un, embout, **caractérisé en ce que** la partie de raccordement et l'embout sont configurés comme corps d'une seule pièce, qui est fabriqué au moyen du procédé « Metal Injection Moulding ».

6. Raccord selon la revendication 5, dans lequel au moins un embout se trouve sous un angle par rapport à la partie de raccordement.

7. Raccord selon la revendication 5 ou 6, dans lequel la partie de raccordement est conçue en vue d'être enfichée dans un trou correspondant dans l'organe raccordé.

8. Raccord selon une ou plusieurs des revendications 5 à 7 ci-dessus, dans lequel le corps d'une seule pièce est en acier inoxydable, de préférence RVS 316.

9. Conduite hydraulique flexible avec une armature de renforcement enrobée dans un matériau élastique, qui est dotée, à une extrémité, d'un raccord selon une ou plusieurs des revendications 5 à 8 ci-dessus.
